# EUROPEAN PATENT APPLICATION

(11) **EP 4 328 138 A1**
(43) Date of publication of application: **28.02.2024**
(21) Application number: 22275115.8
(22) Date of filing: 22.08.2022
(51) Int. Cl.: B64D 27/24, B64C 11/48, B64U 50/19, H02K 16/00

(54) **MOTOR ASSEMBLY**

(71) Applicant: Goodrich Control Systems, West Midlands B90 4SS (GB)
(72) Inventor: HARRIS, Paul, Leighton Buzzard, LU7 2SY (GB); DOWNES, Mark, Birmingham, B48 7LT (GB); PAGE, Andrew, Tring, HP23 4QD (GB)
(74) Representative: Dehns

(57) **Abstract**

A motor assembly (100, 200) including a housing (101, 201), a first rotor (R1, R1') and a second rotor (R2, R2') provided in the housing (101, 201). The first rotor (R1, R1') is configured to drive a first output shaft (110, 210), and the second rotor is configured to drive a second output shaft (112, 212).

## Description

### TECHNICAL FIELD

The present disclosure relates to a motor assembly and in particular, a motor assembly for propulsion systems.

### BACKGROUND

In a conventional assembly, electrical machines direct drive for propulsion systems, for example, propellers or ducted fans in urban mobility vehicles, rotorcraft, small aircraft, and the like. In principle, rotor magnets rotate relative to a fixed stator to drive a rotor to carry torque to an output shaft.

### SUMMARY OF THE INVENTION

In one aspect, there is provided a motor assembly, the motor assembly comprising a housing, a first rotor and a second rotor provided in the housing. The first rotor is configured to drive a first output shaft, and the second rotor is configured to drive a second output shaft.

The motor assembly may further comprise a first stator and a second stator provided in the housing.

The motor assembly may further comprise an electronics module. The electronics module may be configured to instruct, via the first stator, the first rotor to drive the first output shaft in a first direction and at a first speed, and the electronics module may be configured to instruct, via the second stator, the second rotor to drive the second output shaft in a second direction and at a second speed. The first direction and the first speed may be the same as the second direction and the second speed; or the first direction and the second direction may be different, and the first speed and the second speed may be the same; or the first direction and the second direction may be the same and the first speed and the second speed may be different; or the first direction and the first speed may be different from the second direction and the second speed.

The motor assembly may further comprise a cooling module.

In another aspect, there is provided an aircraft, the aircraft comprising a motor assembly as described above.

The aircraft may further comprise a first propeller, a second propeller. The first output shaft may be configured to drive the first propeller and the second output shaft may be configured to drive the second propeller.

In a further aspect, there is provided a method comprising providing a first rotor and a second rotor within a housing, driving a first output shaft with the first rotor, and driving a second output shaft with the second rotor.

The method may further comprise providing a first stator and a second stator in the housing.

The method may further comprise providing an electronics module. The electronics module may be configured to instruct the first stator to drive the first output shaft in a first direction and at a first speed, and wherein the electronics module may be configured to instruct the second stator to drive the second output shaft in a second direction and at a second speed. The first direction and the first speed may be the same as the second direction and the second speed; or the first direction and the second direction may be different, and the first speed and the second speed may be the same; or the first direction and the second direction may be the same and the first speed and the second speed may be different; or the first direction and the first speed may be different from the second direction and the second speed.

The method may further comprise providing a cooling module.

### BRIEF DESCRIPTION OF THE DRAWINGS

Figure 1A shows an example of a motor assembly.
Figure 1B shows an example of the motor assembly of Figure 1A, in use.
Figure 2A shows another example of a motor assembly.
Figure 2B shows an example of the motor assembly of Figure 2A, in use.

### DETAILED DESCRIPTION

In general, the present disclosure relates to a dual rotor assembly for use with propulsion systems. In the examples below, there are shown uses for a motor assembly for use with a propeller system. However, it is envisaged that the motor assembly could be used with any kind of propulsion systems, for example, turbine engines, propeller systems, fan duct systems, and the like. Therefore, the examples below are not just limited to propeller systems.

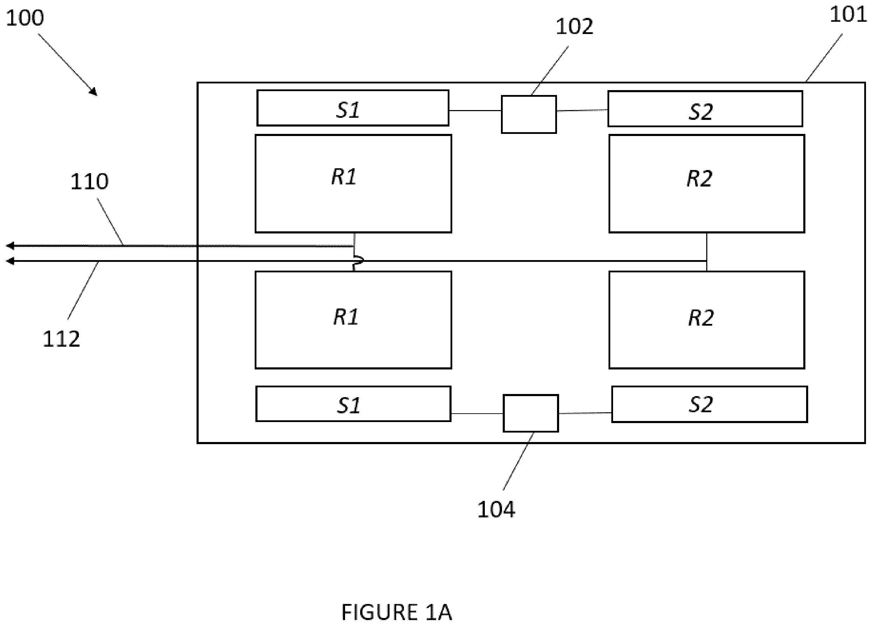

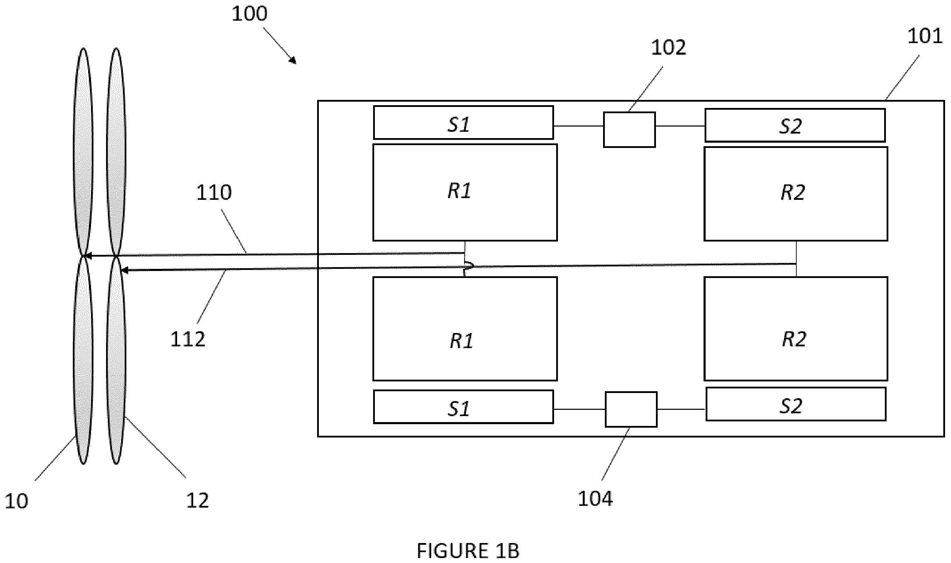

Figures 1A and 1B show an example of a motor assembly 100. The motor assembly 100 includes a housing 101. Within the housing 101, there may be provided a first rotor R1 and a second rotor R2. As shown in Figures 1A and 1B, there are two rotors provided, R1 and R2. It is envisaged that the first rotor R1 and the second rotor R2 will be able to rotate around a central axis and that the motor assembly 100 will also include fixed stators, S1 and S2, for each of the first rotor R1 and the second rotor R2 such that the first rotor R1 may rotate independently of the second rotor R2. Although there are only shown two rotors and two stators in Figures 1A and 1B, it is envisaged that any multiple number of rotors and stators could be included within the housing 101. As an example, there may be 3 or 4, or more rotors and stators provided in the housing 101 that would each have their own mechanisms to be able to rotate independently from each other.

As shown in Figures 1A and 1B, the housing 101 also includes an electronics module 102 that is connected to both the first stator S1 and the second stator S2. The electronics module 102 provides electrical signals and instructions to the respective stators which act upon the first rotor R1 and the second rotor R2. For example, the electronics module 102 may, via the stator S1, instruct the first rotor R1 to rotate in a first direction (e.g. either clockwise or anti-clockwise around the central axis) and at a first speed. The electronics module 102 may, via the stator S2, also instruct the second rotor R2 to rotate in a second direction (e.g. either clockwise or anti-clockwise around the central axis) and at a second speed. It is envisaged that the electronics module 102 can effectively alter the direction and speed of the first rotor R1 and/or the second rotor R2. The electronics module 102 may include incorporated electronics for both the first stator S1 and the second stator S2. The electronics module may include separate electronics for the first stator S1 and the second stator S2. However, in both cases, the electronics are contained in the single electronics module 102 for saving space within the housing 101.

The housing 101 may also include a cooling module 104 that is also connected to the first stator S1 and the second stator S2. The cooling module 104 assists in cooling the systems in and around the first stator S1 and the second stator S2, and, for example, a first rotor R1 and second rotor R2. The cooling module 104, for example, may provide cooling fluid to the first rotor R1 and the second rotor R2 to cool the systems during use. The cooling module 104 may include incorporated cooling systems for both the first rotor R1 and the second rotor R2. The cooling module 104 may include separate cooling systems for the first rotor R1 and the second rotor R2. However, in both cases, the cooling systems are contained in the single cooling module 104 for saving space within the housing 100.

As shown in Figures 1A and 1B, the first rotor R1 is connected to a first output shaft 110. The second rotor R2 is connected to a second output shaft 112. In this way, the first rotor R1 provides torque to the first output shaft 110 to drive the first output shaft 110 in a first direction and at a first speed, as described above in relation the first rotor R1. The second rotor R2 provides torque to the second output shaft 112 to drive the second output shaft 112 in a second direction and at a second speed. The first direction and the second direction may be the same, or, alternatively, may be different directions. The first and the second speed may be the same, or, alternatively, may be different speeds.

As an example, Figure 1B shows the motor assembly 100 in use with a propeller system. However, it is to be noted that the motor assembly 100 may be used with any propulsion system, as mentioned above. In Figure 1B, the first output shaft 110 may be connected to a first propeller 10. The first output shaft 110 therefore provides torque to the first propeller 10 to drive the first propeller 10 in the first direction and at the first speed. The second output shaft 112 may be connected to a second propeller 12. The second output shaft 112 therefore provides torque to the second propeller 12 to drive the second propeller 12 in the second direction and at the second speed.

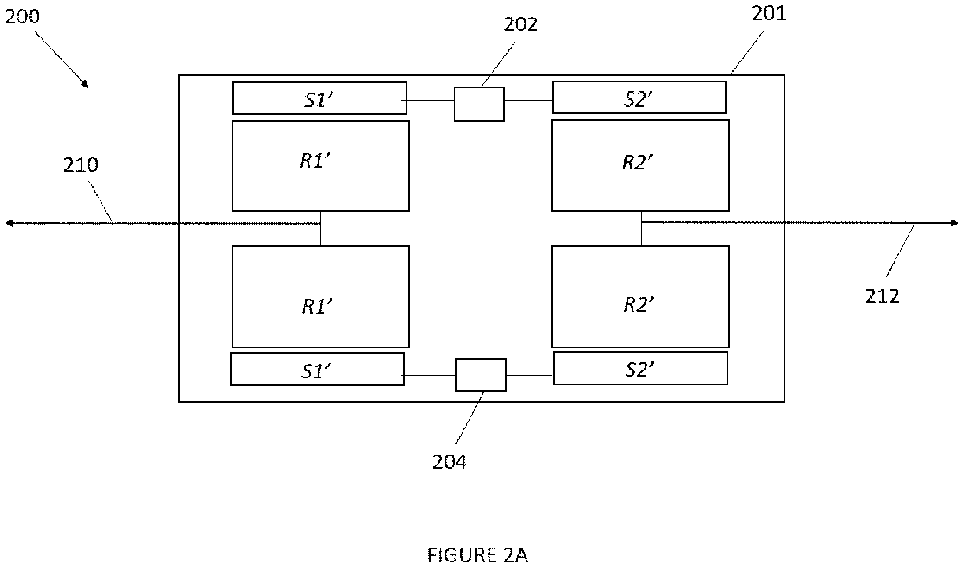

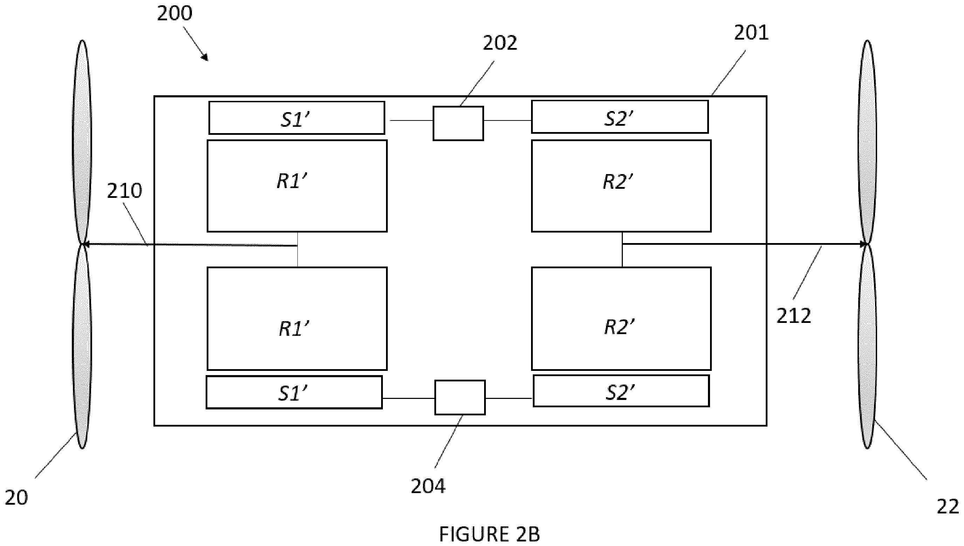

Referring now to Figures 2A and 2B, these Figures show another example of a motor assembly 200. The motor assembly 200 includes a housing 201. Within the housing 201, there may be provided a first rotor R1' and a second rotor R2'. As shown in Figures 2A and 2B, there are two rotors provided, R1' and R2'. It is envisaged that the first rotor R1' and the second rotor R2' will be able to rotate around a central axis and that the motor assembly 200 includes fixed stators, S1' and S2', for each of the first rotor R1' and the second rotor R2' such that the first rotor R1' may rotate independently of the second rotor R2'. Although there are only shown two rotors and stators in Figures 2A and 2B, it is envisaged that any multiple number of rotors and stators could be included within the housing 201. As an example, there may be 3 or 4, or more rotors and stators provided in the rotor housing 201 that would each have their own mechanisms to be able to rotate independently from each other.

As shown in Figures 2A and 2B, the housing 201 also includes an electronics module 202 that is connected to both the first stator S1' and the second stator S2'. The electronics module 202 provides electrical signals and instructions to the respective stators which act upon the first rotor R1' and the second rotor R2'. For example, the electronics module 202 may via the stator S1' instruct the first rotor R1' to rotate in a first direction (e.g. either clockwise or anti-clockwise around the central axis) and at a first speed. The electronics module 202 may via the stator S2' also instruct the second rotor R2' to rotate in a second direction (e.g. either clockwise or anti-clockwise around the central axis) and at a second speed. It is envisaged that the electronics module 202 can effectively alter the direction and speed of the first rotor R1' and/or the second rotor R2'. The electronics module 202 may include incorporated electronics for both the first stator S1' and the second stator S2'. The electronics module may include separate electronics for the first stator S1' and the second stator S2'. However, in both cases, the electronics are contained in the single electronics module 202 for saving space within the housing 201.

The housing 201 may also include a cooling module 204 that is also connected to the first stator S1' and the second stator S2'. The cooling module 204 assists in cooling the systems in and around the first stator S1' and the second stator S2', and, for example, a first rotor R1' and second rotor R2'. The cooling module 204, for example, may provide cooling fluid to the first rotor R1' and the second rotor R2' to cool the systems during use. The cooling module 204 may include incorporated cooling systems for both the first rotor R1' and the second rotor R2'. The cooling module 204 may include separate cooling systems for the first rotor R1' and the second rotor R2'. However, in both cases, the cooling systems are contained in the single cooling module 204 for saving space within the housing 201.

As shown in Figures 2A and 2B, the first rotor R1' is connected to a first output shaft 210. The second rotor R2' is connected to a second output shaft 212, that is at an opposite end of the housing 201. In this way, the first rotor R1' provides torque to the first output shaft 210 to drive the first output shaft 210 in a first direction and at a first speed, as described above in relation the first rotor R1'. The second rotor R2' provides torque to the second output shaft 212 to drive the second output shaft 212 in a second direction and at a second speed. The first direction and the second direction may be the same, or, alternatively, may be different directions. The first and the second speed may be the same, or, alternatively, may be different speeds.

As an example, Figure 2B shows the motor assembly 200 in use with a propeller system. However, it is to be noted that the motor assembly 200 may be used with any propulsion system, as mentioned above. In Figure 2B, the first output shaft 210 may be connected to a first propeller 20. The first output shaft 210 therefore provides torque to the first propeller 20 to drive the first propeller 20 in the first direction and at the first speed. The second output shaft 212 may be connected to a second propeller 22. As shown in Figure 2B, the second propeller 22 is provided at the opposite end to the first propeller 20 of the rotor housing 201. The second output shaft 212 therefore provides torque to the second propeller 22 to drive the second propeller 22 in the second direction and at the second speed.

The motor assemblies described above provide a compact package for electrical propulsion of systems where more than one propulsion is required. For example, having both rotors in one housing allows for a more compact assembly. Further, the power from both rotors can be reduced by half when both rotors are being used to create the full propulsion required. Furthermore, including the stators, electronics modules and cooling modules, as described above, reduces wiring connections to external systems and reduces transmission line effects.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A motor assembly (100, 200), the motor assembly comprising:
a housing (101, 201);
a first rotor (R1, R1') and a second rotor (R2, R2') provided in the housing (101, 201);
wherein the first rotor (R1, R1') is configured to drive a first output shaft (110, 210), and wherein the second rotor is configured to drive a second output shaft (112, 212).

2. The motor assembly (100, 200) as claimed in claim 1, further comprising a first stator (S1, S1') and a second stator (S2, S2') provided in the housing (101, 201).

3. The motor assembly (100, 200) of any preceding claim, further comprising an electronics module (102, 202).

4. The motor assembly (100, 200) of claim 3, wherein the electronics module (102, 202) is configured to instruct via the first stator (S1, S1') the first rotor (R1, R1') to drive the first output shaft (110, 210) in a first direction and at a first speed, and wherein the electronics module (102, 202) is configured to instruct via the second stator (S2, S2') the second rotor (R2, R2') to drive the second output shaft (210, 212) in a second direction and at a second speed.

5. The motor assembly (100, 200) of claim 4, wherein the first direction and the first speed are the same as the second direction and the second speed; or
wherein the first direction and the second direction are different, and the first speed and the second speed are the same; or
wherein the first direction and the second direction are the same and the first speed and the second speed are different; or
wherein the first direction and the first speed are different from the second direction and the second speed.

6. The motor assembly (100, 200) of any preceding claim, further comprising a cooling module (104, 204).

7. An aircraft, the aircraft comprising:
a motor assembly as claimed in any preceding claim.

8. The aircraft of claim 7, further comprising:
a first propeller (10, 20);
a second propeller (12, 22);
wherein the first output shaft (110, 210) is configured to drive the first propeller (10, 20) and the second output shaft (112, 212) is configured to drive the second propeller (12, 22).

9. A method comprising:
providing a first rotor and a second rotor within a housing;
driving a first output shaft with the first rotor; and
driving a second output shaft with the second rotor.

10. The method as claimed in claim 9, further comprising providing a first stator and a second stator in the housing.

11. The method of any of claim 9 or 10, further comprising providing an electronics module.

12. The method of claim 11, wherein the electronics module is configured to instruct the first stator to drive the first output shaft in a first direction and at a first speed, and wherein the electronics module is configured to instruct the second stator to drive the second output shaft in a second direction and at a second speed.

13. The method of claim 12, wherein the first direction and the first speed are the same as the second direction and the second speed; or
wherein the first direction and the second direction are different and the first speed and the second speed are the same; or
wherein the first direction and the second direction are the same and the first speed and the second speed are different; or
wherein the first direction and the first speed are different from the second direction and the second speed.

14. The method of any of claims 9-13, further comprising providing a cooling module.
